# EUROPEAN PATENT APPLICATION

(11) **EP 3 339 177 A1**
(43) Date of publication of application: **27.06.2018**
(21) Application number: 17210166.9
(22) Date of filing: 22.12.2017
(51) Int. Cl.: B64D 13/06

(54) **MULTI-MODE ENVIRONMENTAL CONTROL SYSTEMS**

(30) Priority: 22.12.2016 US 201615388036
(71) Applicant: Goodrich Corporation, Charlotte, NC 28217-4578 (US)
(72) Inventor: WHITTUM, Mark L., Newton, MA 02460 (US); DYER, Gavin, Hollis, NH 03049 (US)
(74) Representative: Dehns

(57) **Abstract**

An environmental control system includes a coolant line (101) for circulating a coolant, a vapor cycle cooler (103) comprising an evaporator (103a) in thermal communication with the coolant line to cool the coolant, and a ram air cooler system (105) including a ram air cooler and configured to provide selective cooling to the coolant line.

## Description

### BACKGROUND

### 1. Field

The present disclosure relates to environmental cooling systems (ECSs), more specifically to multi-mode ECSs.

### 2. Description of Related Art

Cooling pod-mounted high power electronics on certain aircraft requires significant environmental cooling system (ECS) cooling capacity. This requirement is becoming greater than that which an aircraft's electrical system can provide.

Such conventional methods and systems have generally been considered satisfactory for their intended purpose. However, there is still a need in the art for an improved ECS. The present disclosure provides a solution for this need.

### SUMMARY

An environmental control system includes a coolant line for circulating a coolant, a vapor cycle cooler comprising an evaporator in thermal communication with the coolant line to cool the coolant, and a ram air cooler system including a ram air cooler configured to provide selective cooling to the coolant line.

In certain embodiments, the ram air cooler system can be in selective thermal communication and/or fluid communication with the coolant line. For example, the ram air cooler system can include a valve and a ram air cooler branch.

The ram air cooler can be in thermal communication with the ram air branch. In an open position, the valve can be configured to allow coolant to flow to the ram air cooler branch from the coolant line to be cooled by the ram air cooler. In certain embodiments, in a closed position, the valve can prevent the coolant from flowing to the ram air branch from the coolant line.

In certain embodiments, valve can be moved to at least one throttled position. In the at least one throttled position, the valve can reduce a flow of the coolant to the ram air branch from the coolant line.

In certain embodiments, the ram air cooler system can include a gate configured to selectively allow ram air into the ram air cooler. The gate can include an open position where ram air is allowed to flow into the ram air cooler and a closed position wherein ram air is prevented from flowing into the ram air cooler. In certain embodiments, the gate can include a variable position gate that can be configured to throttle a flow of ram air into the ram air cooler.

In certain embodiments, the system can include a heat source (e.g., aircraft electronics) operatively connected to the coolant line. The system can include a temperature sensor operatively connected to the coolant line. The system can include controller operatively connected to the temperature sensor and the ram air cooler system. The controller can be configured to selectively cause the ram air cooling system to cool the coolant in the coolant line based on the temperature of the coolant in the coolant line sensed by the temperature sensor.

In accordance with at least one disclosure, a method can include cooling a coolant in a cooling line with a vapor cycle cooler, and selectively cooling the coolant with a ram air cooler system if a temperature of the coolant exceeds a predetermined threshold. The method can include preventing the ram air cooler system from cooling the coolant in the coolant line if the temperature of the coolant is below a predetermined threshold.

These and other features of the systems and methods of the subject disclosure will become more readily apparent to those skilled in the art from the following detailed description taken in conjunction with the drawings.

### BRIEF DESCRIPTION OF THE DRAWINGS

So that those skilled in the art to which the subject disclosure appertains will readily understand how to make and use the devices and methods of the subject disclosure without undue experimentation, embodiments thereof will be described in detail herein below with reference to certain figures, wherein:
Fig. 1 is a schematic view of an embodiment of a system in accordance with this disclosure; and
Fig. 2 is a schematic view of an embodiment of a system in accordance with this disclosure.

### DETAILED DESCRIPTION

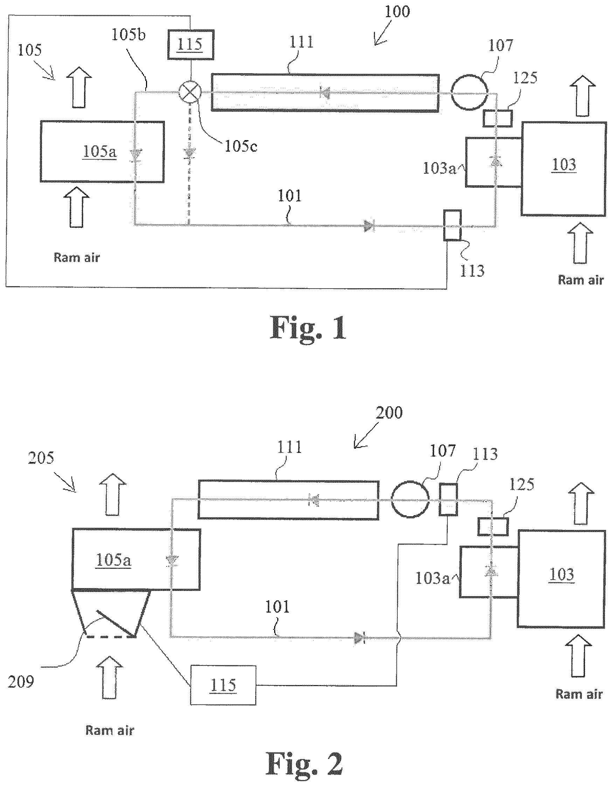

Reference will now be made to the drawings wherein like reference numerals identify similar structural features or aspects of the subject disclosure. For purposes of explanation and illustration, and not limitation, an illustrative view of an embodiment of a system in accordance with the disclosure is shown in Fig. 1 and is designated generally by reference character 100. Other embodiments and/or aspects of this disclosure are shown in Fig. 2. The systems and methods described herein can be used to supply suitable cooling for any suitable system (e.g., aircraft electronics systems).

Referring to Fig. 1, an environmental control system 100 includes a coolant line 101 for circulating a coolant. The system 100 includes a vapor cycle cooler 103 comprising an evaporator 103a in thermal communication with the coolant line 101 to cool the coolant.

The system 100 also includes a ram air cooler system 105 including a ram air cooler 105a and configured to provide selective cooling to the coolant line 101. The system can include a suitable pump 107 for circulating the coolant through the coolant line 101.

In certain embodiments, the ram air cooler system 105 can be in selective thermal communication and/or fluid communication with the coolant line 101. For example, the ram air cooler system 105 can include a valve 105c and a ram air cooler branch 105b.

As shown, the ram air cooler 105a can be in thermal communication with the ram air branch 105b. In an open position, the valve 105c can be configured to allow coolant to flow to the ram air cooler branch 105b from the coolant line 101 to be cooled by the ram air cooler 105a. In certain embodiments, in a closed position, the valve 105c can totally prevent the coolant from flowing to the ram air branch 105b from the coolant line 105.

In certain embodiments, valve 105c can be moved to at least one throttled position. In the at least one throttled position, the valve 105c can reduce a flow of the coolant to the ram air branch 105b from the coolant line 101.

Referring additionally to Fig. 2, in certain embodiments, a ram air cooler system 205 of an ECS system 200 can include a gate 209 configured to selectively allow ram air into the ram air cooler 105a. The gate 209 can include an open position where ram air is allowed to flow into the ram air cooler 105a and a closed position wherein ram air is prevented from flowing into the ram air cooler 105a. In this regard, flow can be allowed or prevented to modify whether the coolant in the line 101 is cooled by the ram air cooler 105a.

In certain embodiments, the gate 209 can include a variable position gate that can be configured to throttle a flow of ram air into the ram air cooler 105a. In this regard, a flow rate can be modified by positioning the gate 209 in one or more partially open positions (e.g., between fully open and fully closed) to modify the amount of cooling that the ram air cooler 105a provides to the coolant in the coolant line 10].

In certain embodiments, the system can include a heat source 111 (e.g., aircraft electronics such as radar, electro-optical or other sensor systems) in thermal communication with the coolant line 101. Any suitable heat source for cooling by the coolant in the coolant line 101 is contemplated herein. In certain embodiments, a powered heater 125 can be included in the coolant line 101 for when heating rather than cooling is needed or desired (e.g., for cold weather operation).

In certain embodiments, a temperature sensor 113 can be operatively connected to the coolant line 101 to sense a temperature of the coolant in the coolant line 101. The temperature sensor 113 can be placed in any suitable position in the coolant line 101 (e.g., as shown differently in Figs. 1 and 2). In certain embodiments, a controller 115 can be operatively connected to the temperature sensor 113 and the ram air cooler system 105, 205.

The controller 115 can be configured to selectively cause the ram air cooling system 105, 205 to cool the coolant in the coolant line 101 based on the temperature of the coolant in the coolant line 101 sensed by the temperature sensor 113. For example, if the coolant is too hot, the controller 115 can move the valve 105c or the gate 209 to an open position (or a more open position) to cause and/or increase cooling. If the coolant is too cold, the controller 115 can move the valve 105c or the gate 209 to a closed position (or a more closed position) to prevent or reduce cooling.

In accordance with at least one disclosure, a method can include cooling a coolant in a cooling line with a vapor cycle cooler, and selectively cooling the coolant with a ram air cooler system if a temperature of the coolant exceeds a predetermined threshold. The method can include preventing the ram air cooler system from cooling the coolant in the coolant line if the temperature of the coolant is below a predetermined threshold.

In certain embodiments, the vapor cycle cooler can be turned off if sufficient cooling from the ram air cooler system can be achieved (e.g., at high speeds and/or altitudes). In this regard, the ram air cooler system can provide sufficient cooling alone in certain circumstances.

As described above, embodiments include a dual ram air cooling ECS that can provide additional cooling capacity for heat sources (e.g., pod electronics on an aircraft). Embodiments provide redundancy, added safety, and energy efficiency.

The methods and systems of the present disclosure, as described above and shown in the drawings, provide for environmental cooling systems with superior properties. While the apparatus and methods of the subject disclosure have been shown and described with reference to embodiments, those skilled in the art will readily appreciate that changes and/or modifications may be made thereto without departing from the scope of the subject invention as defined by the claims.

## Claims

1. An environmental control system, comprising:
a coolant line (101) for circulating a coolant;
a vapor cycle cooler (103) comprising an evaporator (103a) in thermal communication with the coolant line to cool the coolant; and
a ram air cooler system (105) including a ram air cooler (105a) and configured to provide selective cooling to the coolant line.

2. The system of claim 1, wherein the ram air cooler system is in selective thermal communication and/or fluid communication with the coolant line.

3. The system of claim 2, wherein the ram air cooler system includes a valve (105c) and a ram air cooler branch (105b).

4. The system of claim 3, wherein the ram air cooler is in thermal communication with the ram air branch.

5. The system of claim 4, wherein, in an open position, the valve (105c) is configured to allow coolant to flow to the ram air cooler branch from the coolant line to be cooled by the ram air cooler.

6. The system of claim 5, wherein, in a closed position, the valve (105c) prevents the coolant from flowing to the ram air branch from the coolant line.

7. The system of claim 5, wherein, in at least one throttled position, the valve reduces a flow of the coolant to the ram air branch from the coolant line.

8. The system of any preceding claim, wherein ram air cooler system includes a gate (209) configured to selectively allow ram air into the ram air cooler.

9. The system of claim 8, wherein the gate includes an open position where ram air is allowed to flow into the ram air cooler and a closed position wherein ram air is prevented from flowing into the ram air cooler.

10. The system of claim 8, wherein the gate includes a variable position gate that is configured to throttle a flow of ram air into the ram air cooler.

11. The system of any preceding claim, further comprising a heat source (111) operatively connected to the coolant line.

12. The system of any preceding claim, further comprising a temperature sensor (113) operatively connected to the coolant line.

13. The system of claim 12, further comprising a controller (115) operatively connected to the temperature sensor and the ram air cooler system, wherein the controller is configured to selectively cause the ram air cooling system to cool the coolant in the coolant line based on the temperature of the coolant in the coolant line sensed by the temperature sensor.

14. A method, comprising:
cooling a coolant in a cooling line with a vapor cycle cooler; and
selectively cooling the coolant with a ram air cooler system if a temperature of the coolant exceeds a predetermined threshold.

15. The method of claim 14, further comprising preventing the ram air cooler system from cooling the coolant in the coolant line if the temperature of the coolant is below a predetermined threshold.
